# EUROPEAN PATENT APPLICATION

(11) **EP 4 617 142 A1**
(43) Date of publication of application: **17.09.2025**
(21) Application number: 24162765.2
(22) Date of filing: 11.03.2024
(51) Int. Cl.: B61L 23/04, B61L 27/53, B61L 27/57, G06N 3/02

(54) **COMPUTER-IMPLEMENTED METHOD FOR CENTRAL MONITORING AND MAINTAINING OF A RAILWAY SYSTEM, MONITORING STATION AND RAILWAY SYSTEM**

(71) Applicant: Hitachi Rail GTS Deutschland GmbH, 71254 Ditzingen (DE)
(72) Inventor: Adusumalli, Vijaya Bhaskar, 10707 Berlin (DE); Ben Khelify, Chama, 71254 Ditzingen (DE); Marin Millan, Ana Maria, 28033 Madrid (ES); Wernhart, Wolfgang, 2122 Münichsthal (AT)
(74) Representative: Kohler Schmid Möbus Patentanwälte

(57) **Abstract**

The invention relates to a computer-implemented method (10) for central monitoring and maintaining of a railway network (12) consisting of a multitude of devices (16, 16a-c) with a monitoring station (18), wherein:
(a) a computational unit (26) of the monitoring station (18) determines a health index (22) of each device (16, 16a-c) by rating at least one health parameter (24) provided by each device (16, 16a-c) using a predetermined parameter table;
(b) the computational unit (26) determines an operational importance index (30) for each of the devices (16, 16a-c) based on a degree of importance of an associated railway line (14, 14a-c) and an impact of a device failure on the operation of the railway line (14, 14a-c);
(c) the computational unit (26) determines an maintenance index (34) for each device (16, 16a-c) depending on the respective operational importance index (30) and the respective health index (22);
(d) an interface (38) of the monitoring station (18) outputs the maintenance indexes (34) of the devices (16, 16a-c) sorted by value.

The invention also relates to a monitoring station (18) and a railway system (40).

## Description

### Background of the invention

The invention relates to a computer-implemented method for central monitoring and maintaining of a railway system. The invention also relates to a monitoring station configured to perform the method for central monitoring and maintaining of a railway system. The invention further relates to a railway system comprising such a monitoring station.

Typically, railway systems are designed as network infrastructures, incorporating an array of track-side equipment. This equipment comprises a wide variety of different devices and facilities strategically positioned along the railway track. Their purpose is to ensure safe signalling operations, thereby facilitating the smooth running of both passenger and freight trains.

Safe train operations, reduced rail network downtime, and increased equipment lifespan are the primary focuses for railway infrastructure managers. However, to achieve these goals, timely and accurate maintenance actions on the equipment are required. Not every piece of equipment needs to be attended to with the same priority. The priority of maintenance intervention can vary, depending on the physical location of the equipment. For instance, equipment located at a busy train station on a mainline responsible for high-density train traffic needs to be monitored more carefully and attended to quickly due to the impact on train traffic in the event of failure. Conversely, a fault in a parking area at the same station could be resolved at a lower priority. These priorities can also be dynamic due to changes in the importance of the line. For example, when a secondary line is utilized fully due to a blockage on the mainline, the secondary line becomes more significant and critical for monitoring.

However, the vast number of devices that need monitoring, in addition to the frequent and unexpected occurrence of faults, poses a significant challenge for timely and appropriate maintenance. In practical terms, important maintenance processes are often overlooked or deferred due to misprioritization by maintenance technicians. This can lead to failures in devices of the equipment which are critical to maintaining rail traffic, resulting in significant costs and delays to trains.

For these reasons, attempts are being made to monitor the condition of trackside equipment. Such methods and systems are exemplified in [1], [2], and [3], among others. Non-generic state of the art is described in the US 11,461,089 B2, where the status of devices is determined using performance indicators.

However, the methods and systems known from the prior art provide only a list of statuses of all monitored equipment. Maintenance technicians must check and categorize these. This list contains not only critical messages but also a large number of non-critical messages, which can potentially be disregarded. This process demands a considerable amount of time, which either delays or entirely prevents the effective maintenance of critical devices.

### Objective of the invention

The objective of the invention is to propose a method and a device which allow for straightforward and clear monitoring of trackside equipment, executing maintenance in a targeted and efficient manner, and maintaining smooth train traffic.

### Description of the invention

This object is solved by a computer implemented method with the features according to claim 1. Additionally, the object is solved by a monitoring station comprising the features according to claim 14 and a railway system comprising the features according to claim 15. The subclaims relate to preferred embodiments of the invention.

According to the invention, a computer-implemented method is provided for centralized monitoring and maintenance of a railway system.

The railway system consists of a multitude of devices. The devices can be designed as on-board and/or off-board devices and arranged stationary and/or on trains used within the rail system.

The railway system may me preferably, in particular exclusively, consists of a multitude of trackside arranged devices. The devices can be referred to as trackside equipment. The procedure is usually performed by a monitoring station, which is described below in further detail.

Items that fall under trackside devices (assets) include point machines, signalling units, balises, switches, train detection systems, and general field elements. Each have a crucial role in maintaining the railway system operational integrity. The list is not intended to be exhaustive.

It may be intended that only those devices are monitored that are required for the smooth running of rail traffic. This allows a preselection to be made and the number of devices to be monitored to be reduced.

One step of the method involves determining of a health index of each of the, in particular trackside arranged, devices. Determining the health index is performed by rating at least one health parameter provided by each of the devices. In other words, the health index is derived by rating at least one health parameter associated with each device. Typically, the health parameter is rated by using a predetermined parameter table. In particular, the health parameters are rated by comparing the value of each parameter with a parameter range provided by a parameter lookup-table. The health parameter is preferably compared with a parameter normal range. If the parameter falls outside the range intended for the corresponding device, it can be inferred that the device is impaired.

Preferably, the health index of a single device is determined by comparing several, in particular a large number of, health parameters. In other words, the health index is based on the correlations between the health parameters of the respective device. This allows the dependency of different parameters on each other and the effects on the safe operation of the device to be taken into account even more reliably. The health index can thus be understood as a reference value for the overall condition of the device.

The different devices may have distinct health parameters. Health parameters may include essential factors such as power consumption, signal strength, communication quality, noise levels, vibration levels, along with a general assessment of the functionality. For instance, a point machine could be evaluated on its reliability of reaching end positions, the time taken to reach the endpoint, motor temperature, the power drawn and moisture presence inside the casing.

Another step of the method involves determining of an operational importance index for each of the, in particular trackside arranged, devices. In other words, an operational importance index is assigned to each device. The operational importance index is determined based on a degree of importance of an associated railway line and an impact of a device failure on the operation of the respective railway line. Therefore, the operational importance index of the device depends on the operational importance of the railway line associated with the device and the potential impact of a failure of such device might impose on the railway line's operational abilities.

The operational importance index can serve as a critical mechanism for gauging each device's relative value to the overall railway system. This becomes especially useful during unprecedented situations that demand immediate attention, whereupon the operational importance index can help in prioritizing which devices necessitate urgent inspection and maintenance.

Another step of the method involves determining a maintenance index for each device depending on the respective operational importance index and the respective health index. In other words, the maintenance index is calculated by considering both the operational importance index and the health index of each device. By taking the indexes into account, it is possible to determine which devices require maintenance and the priority of the required maintenance. Thereby resources can be deployed strategically and efficiently, enhancing the overall operational efficiency and robustness of the railway system.

The determination of the health index, the importance index and the maintenance index are carried out by a computational unit of the monitoring station.

A further step of the method involves the output, in particular visualisation, of the maintenance indexes of the devices. According to the invention, the maintenance indexes of the devices are displayed in order of value. The output is performed by an interface of the monitoring station. In other words, displaying these indexes via an interface of the monitoring station is made in an organized manner. This visualization provides an intuitive understanding of the prioritized maintenance needs, which may be translated into action by professionals, thereby effectively contributing to the system's smooth operation.

In summary, the computer-implemented method proposed by the invention creates a centralized system for monitoring and maintaining, in particular trackside, devices in a traffic system, especially in a railway network. By determining health and operational importance indexes, the system can identify and prioritize devices that require immediate attention and maintenance. This helps reliably prevent misjudgements and the overlooking of critical maintenance work. Consequently, the method improves railway system management, ensuring a higher level of safety, efficiency, and reliability within the extensive network of railway operations.

This allows dynamically determination of the priority of the maintenance intervention of a safety critical signalling asset by setting up a centralized, continuous health monitoring of the safety critical devices (assets). This will establish focus on the devices that require immediate maintenance for faster network recovery. A combination of the health condition and importance will determine how critical the asset's condition is. When the asset condition becomes more critical the maintainer has to attend to it immediately. The maintainer visualizes the maintenance ranking of the, especially railway trackside, equipment at the interface provisioned centrally. The health parameters required to compute the maintenance index is collected continuously via the network and transmitted to a central station. The maintenance manager therefore has complete set of information to direct on the field maintainer with relevant tools and spare parts including the precise geographic location of the equipment that requires maintenance intervention.

Practical application of the procedure provides the maintenance technician with an overview to see priority sorted list of critical devices at the interface. Preferably the maintainer is alerted whenever a device changes into critical state for a swift action. The maintenance index as an enumeration combining importance of the device and health condition of the device. Both the importance and health condition are dynamic during the network operation. The maintenance index therefore serves as a filter to provide most important and necessary information to react in time. This approach eliminates the need for the maintainer to keep acknowledging alarms that are not important. This improves the work of maintainer to a great extent and ensure safe and secure operation of railway traffic.

In a preferred embodiment of the method, at least one maintenance index is determined in one of at least three categories. In particularly the maintenance index is determined in one of the categories low critical, medium critical, and high critical. This categorization provides an immediate and intuitive understanding of each device's operational state and level of maintenance required, thereby bolstering managerial efficiency. Furthermore, it enables a quick visual assessment of the maintenance requirements of all devices, facilitating effective decision-making and resource allocation for preventative or corrective maintenance. The method therefore prevents delays of trains and ensures a smooth operation of the railway system. Moreover, through this system, predictive maintenance can be effectively scheduled, extending the lifespan of the, especially trackside, equipment and preventing costly, time-consuming repairs.

Particularly preferred, the categories of the maintenance index have a different output colour at the interface. The colour coding system allows for easy visual identification of the criticality of the maintenance needs of the railway's various devices and systems.

Devices may labelled as low critical. These devices may be assumed as to operating satisfactorily and don't require immediate attention. For example, these devices can be visually represented in green in the interface, signalling a state of relative healthiness and operational efficiency.

Devices my labelled as medium critical. The devices according to the medium critical category may be assumed as to be developing a fault. These devices can require preventative or corrective maintenance intervention in the near future. Should these devices remain unattended, they will degrade in performance or even fail completely. Such devices, for example, can be represented in yellow at the interface, acting as a cautionary signal for imminent maintenance needs.

Devices may categorized as high critical. Devices labelled under high critical may be assumed to require urgent maintenance intervention. These devices, if not fixed promptly, could drastically disrupt the traffic flow, given their high operational importance. For example, these devices can be visualized in red at the interface, signalling an immediate need for maintenance attention.

In sum, the categorization of devices based on their health and maintenance needs provides a comprehensive, user-friendly and efficient system for maintaining and monitoring the devices of a railway system.

In a preferred embodiment of the method, at least one health index is determined in at least three categories, specifically in the categories of poor, at-risk, and good. This categorization facilitates a quick understanding of each device's current operational state and potential future state, thus enabling preventive or corrective action to be taken as needed. Therefore, it allows for a swift visual evaluation of the operational state of all the devices in the system, facilitating efficient decision-making and resource allocation for preventative or corrective maintenance. It also enables early detection of potential device failures, allowing for mitigatory action to be taken before a failure occurs. Moreover, by identifying devices that are in good health and likely to continue so, focus and resources can be more effectively directed towards those devices needing attention.

Devices may be categorized as poor. The poor category may represent devices that are no longer operational. Typically, such devices have at least on health parameter outside a respective parameter range for proper function. Using devices with this health index is futile as they will not operate at all. This could endanger safety and result in railway network downtime. This health condition, for example, may be visualized in red at the interface, alerting to the grave circumstances surrounding such a device and the urgent need for a course of action.

Devices may be categorized as at-risk. The at-risk category can include devices that are likely to develop a fault in the near future. There might be indicators pointing to an impending failure of the device. Typically, such devices have at least on health parameter that is borderline in the corresponding parameter range. Without preventative intervention, this device will likely fail soon. This health condition can, for example, be depicted in yellow at the interface, signalling that caution and attention are required.

Devices may be categorized as healthy. The healthy category may encompasses devices in overall good health. Preferably all health parameters of these devices are within the acceptable parameter range. These devices are performing well and are predicted to continue doing so in the near future. No impact on operations is expected from these devices at this time. For example, this condition can be visualized in green at the interface, denoting an operational status that doesn't need immediate attention.

In essence, the categorization of devices based on their health index provides a comprehensive, user-friendly, and efficient means for maintaining and monitoring the gadgets of a railway system.

In a preferred embodiment of the method, at least one operational importance index is determined in at least three categories, specifically in low, medium, and high. Likely, the classification implies an initial assessment of the significance of each device in ensuring a smooth running of rail transport. This allows, at a glance, for an understanding of each device's value to the overall functioning of the railway system. This facilitation, in turn, enables efficient allocation of maintenance resources, prioritizing those devices whose failure would most greatly disrupt railway operations.

Devices may be categorized with low operational importance. Device of the category may be assumed as to be not crucial for the smooth running of rail transport. Their failure would cause minimal or no disruption to the railway traffic. These devices may be visualized in green at the interface. For example, redundant systems that compensate for device failure or lower traffic volume for a specific railway line might cause a device to be of low importance.

Devices may be categorized with medium operational importance. Devices with a medium operational importance index may have increased significance for the seamless operation of rail transport. A failure of such a device could cause mild complications in the railway traffic. Yet, redundant devices or alternative railway routes could likely be used to mitigate such impact. This factor, thus, increases the importance of the corresponding devices. Devices of the category may be visualized in yellow at the interface.

Devices may be categorized with high operational importance. The high category may include devices with major impact on the smooth running of rail transport. Their failure could result in severe complications, safety risks and major delays in railway traffic. A device might be of high importance if it carries an above average traffic load, is located in a critical junction or a busy train station, if it is not repaired within a given period causes a significant impact on traffic, or if alternative options are much more economically costly than fixing the problem with high priority. Devices with high operational importance may visualized in red at the interface.

The importance index of a device along a specific railway line can, for example, be initially set based on yearly traffic volume statistics. As the real-time traffic volume changes, the importance index of each device along the railway line can be adapted accordingly in a dynamic way during runtime.

In a preferred embodiment of the method, the method steps described above and below are individually and/or together repeated continuously, in particular in real-time. In other words, this embodiment incorporates an ongoing repetition of the method steps as part of its process, particularly with an emphasis on real-time operation. The method may be considered as an ongoing cycle that is critical for the smooth functioning and longevity of the system. By continuously repeating the method steps, it allows for up-to-date monitoring of the devices in real-time. This ensures that any changes in a device's health or operational importance are immediately detected and addressed, enhancing the speed and efficiency of responses to any issues arising. It also permits ongoing evaluation and adjustment of the indexes, accounting for changes in device health or importance. In doing so, the method facilitates improved management of maintenance and operations, resulting in fewer disruptions and increased uptime.

Real-time operation, as used here, refers to the process happening instantaneously, allowing for immediate update and response as the health index and/or the importance index of the devices change. This feature lends a significant edge to the method, elevating its capacity to ensure the health and efficiency of the railway system's devices.

In a preferred embodiment of the method, at least one health parameter is rated depending on the environmental conditions of the respective device. In other words, this embodiment of the method considers the environmental conditions in which each device is situated when rating their health parameters. The health parameters are evaluated not purely based on their intrinsic operational characteristics but also take into consideration external influences, i.e., environmental conditions which might significantly impact the performance and longevity of the devices. This allows for a more comprehensive appraisal of the device's health status, factoring in real-world conditions that may impact device functioning. It ensures that the maintenance and inspection schedules are more accurately tailored to cater to the performance requirements of each device, considering the specific environmental challenges they may face. Also, it maintains a more realistic and reliable health and maintenance index, which is critical for the effective allocation of resources in railway system maintenance.

Environmental conditions refer to the various external situations that can affect the device. These could include outside temperatures, maximum and minimum temperatures, temperature ranges, accessibility or reachability of the device, wind speeds, various weather conditions like snow, rain, frost, storms, sandstorms, moisture, water levels etc.

In a preferred embodiment of the method, at least one health parameter is rated depending on the device type of the respective device. In other words, this embodiment of the method places significance on the type of each device when rating the health parameters. Therefore, the device type becomes a guiding factor in assessing the health parameters, indicating that the health of a device is not just dependent on internal functioning and/or environmental conditions for example, but also on the nature of the device itself. Different types of devices can have different thresholds of operations, varying lifespans, and diverse reactions to environmental conditions. Consideration of the device type can provide a more tailored and accurate health and maintenance index for each device. By reflecting these differences in the health parameter ratings, the method can ensure that maintenance resources are allocated optimally to maximize the efficiency and life span of each device type.

The device type refers to the specific kind of the, especially trackside, device under consideration. This could include different models and designs of the same device, or entirely different devices such as a signalling lamp of a signalling device, a point machine, a balise and so on. Each of these device types may have unique functioning parameters and standards, and therefore should be considered distinctively when determining the health index.

In a preferred embodiment of the method, at least one operational importance index is determined depending on a railway traffic volume along a railway line of the respective device. In other words, this embodiment involves the determination of the operational importance index based on the volume of railway traffic that passes along the railway line where the device is located. By associating the operational importance index with the traffic volume, this acknowledges that devices serving high-traffic lines are of higher operational importance. This allows for a more precise valuation of each device's operational significance relative to the railway system as a whole. Devices on busy railway lines, which potentially impact a more significant number of trains and passengers, are given higher importance, ensuring they receive suitable attention and maintenance.

The term railway traffic volume can refer to the number and/or the length of trains crossing a specific segment of a railway line within a given time period. Additionally the railway traffic volume can also consider non-railway-traffic leading to a lower railway traffic volume along the railway line, such as railway crossing. A high volume of traffic would suggest a considerable amount of trains rely on the efficient operation of devices on that segment of the line, which in turn increases the operational importance of those devices.

A railway line pertains to the specific segment or path of the railway network where a device is positioned. It is relevant to a device's importance as devices on heavily used lines could have a larger impact on railway operations, elevating their operational importance index.

In a preferred embodiment of the method, at least one operational importance index is determined based on an amount of redundant railway lines to the railway line of the respective device. It acknowledges the interdependence of devices in the network and the potential for alternate routes to mitigate impacts of any single device failure. There are several benefits associated with considering the number of redundant railway lines when determining the operational importance index. Firstly, this method provides a more nuanced and accurate view of each device's operational importance, considering the potential alternatives in case of device failure. Secondly, it allows for a more balanced distribution of maintenance resources. Devices on lines with fewer redundant options can be given priority as their failure could potentially cause greater disruption to the railway traffic.

The term redundant railway line refers to additional or supplementary railway lines that can be used as alternatives to the main line. This holds particular relevance to the operational importance of devices as devices positioned on lines with fewer redundant alternatives may be considered of higher operational importance due to the potential disruption they could cause in the event of failure.

In a preferred embodiment of the method, at least one operational importance index is determined based on the type of the railway line of a respective device. In other words, this embodiment involves classifying the operational importance index according to the specific type of railway line upon which the device is situated. This approach integrates the distinct nature and role of different railway line types into the valuation of each device's operational importance. Different line types typically correspond to varying levels of traffic, overall significance to the network, and potential impact of device failure. Therefore, accurately factoring in these differences provides a more nuanced and meaningful indication of each device's relative operational importance. This, in turn, can drive efficient and pertinent allocation of maintenance attention and resources.

The type of railway line refers to the specific classification or category of railway line where a device is positioned. It could include a mainline, which is the principal line in a railway network; a secondary or branch line, which diverts from the mainline and typically carries less traffic; or, alternatively, it could be a parking yard or shunting line, which are used mostly for train storage or assembly. This list is not intended to be exhaustive. Each type of line carries distinct operational parameters and importance within the railway network, thereby influencing the operational importance of the devices located on them.

In a preferred embodiment of the method, at least one operational importance index is determined based on the mode of the railway line of a respective device. In other words, this embodiment factors in the mode of operation on the railway line where each device is situated when determining its operational importance index. This approach acknowledges that each device's operational importance is not static but instead varies depending on the operational state of the line it serves. This ensures a device's index accurately reflects its current importance in the operational context. By accounting for varying line modes, the method enhances its ability to allocate maintenance resources where they are needed most.

The mode of the railway line refers to the operational state of the line where the device is situated. This could be a normal mode, where operations proceed regularly; a degraded mode, where operational conditions are less than optimal; or even user individual criteria. For example, the operational importance index may increase if a railway line is operated in a degraded mode since a device failure in this situation could have a larger impact on ensuring safe operation.

In a preferred embodiment of the method, according to one of the preceding claims, steps (a), (b) and/or (c) are performed by a neural network.

In other words, this embodiment incorporates the use of a neural network to execute steps (a), (b), and/or (c) of the method. This technologically advanced approach delegates the processes of determining and rating health and operational importance indices to an intelligent system capable of learning and improving its performance and precision over time. This brings in a high level of automation, reducing the need for human intervention and thereby increasing efficiency and reducing the possibility of human error. Additionally, leveraging machine learning capabilities allows the system to improve over time as the network learns from past data, resulting in more accurate and reliable indices. For example, influence and/or impact of health parameters on a safe operation of the respective device may change depending on the wear and tear, maintenance history, weather conditions, train speeds, location of the device will influence the health parameter and range of values for each of the health parameter. By using a neural network, such dynamic changes can be taken into account and the determination of the indices can be further improved.

Furthermore, the network can be realised in a way, that dynamic data collected during runtime are considered and the respective indices are adapted accordingly. As an ultimate additional step the system can also consider human feedback in the learning process to correct potential questionable automatic results.

The neural network is typically trained on the basis of known input variables whose effects on predetermined output variables are known. Preferably, the neural network is trained on the basis of historical performance data, failure data and/or health parameters whose effect on the health index, the operational reliability index and/or the maintenance index is known. Similar training can be performed to correlate the risk of failure of a device to the errors generated or events generated over a period of time. Training is typically carried out using a large number of data sets. This can improve the predictive ability of the neural network.

In a preferred embodiment of the method, according to one of the preceding claims, the monitoring station outputs at least one maintenance information for fixing a failure of a respective device. This means that this embodiment involves the monitoring station providing specific maintenance information or suggestions intended to rectify any identified failures of a given device (maintenance intervention proposals). This feature exemplifies the proactive approach of the method by not only identifying and assessing devices but also guiding the subsequent maintenance process with targeted information. By automatically generating maintenance intervention proposals, this method significantly aids in streamlining maintenance operations. It enables quick and directed maintenance actions based on reliable information, thereby minimizing downtime and enhancing overall system efficiency.

A maintenance intervention proposal is a specific type of output generated by the monitoring station. It contains targeted maintenance information created to address identified failures in a device. This proposal is aimed at providing practical steps towards fixing a specific issue with the respective device, thereby ensuring prompt and efficient maintenance intervention. For example, a maintenance technician can be provided with information on the type of appliance to be serviced, precise position data, a display of the deviating health parameter and/or information on required spare parts and/or tools.

The objective is also solved by a monitoring station.

The monitoring station comprises a computational unit and an interface. The monitoring station is configured to carry out the method described above and below. The inclusion of both a computational unit and an interface allows for seamless execution of method steps, from processing the necessary computations to facilitating user interaction. Additionally, the station ensures an integrated approach to device monitoring and maintenance, enhancing overall efficiency. Furthermore, the system provides a tangible and interactive mechanism for carrying out the method, making it practical and user-friendly.

The monitoring station in this context refers to an apparatus specifically set up to perform the mentioned method. It includes, but not limited to, a computational unit for data processing and an interactive interface.

The computational unit is a component of the monitoring station designed to execute the calculations necessary for the method. This involves determining health indexes, operational importance indexes, maintenance index and potentially even generating detailed maintenance information for the devices. Preferably, the computational unit can also be located in a datacentre or in a public cloud with adequate connectivity to the interface described below. This means that the procedure can be carried out even more flexibly and independently of location.

The interface serves as the touchpoint between the user and the monitoring station. It allows for the display of the processed information, namely the maintenance index but also health and operational importance indexes. The interface also can serve for receiving user inputs. This interactive component makes the system user-friendly and easy to operate.. The interface may serve as a human-machine interface and facilitates bidirectional communication-displaying output information, including the maintenance indexes of the devices, and receiving inputs from a user.

Typically, the monitoring station comprises a communication unit that allows data transfer between the monitoring station and the devices. Furthermore, the monitoring station may comprise a data storage unit where relevant data could be stored for future reference.

The monitoring station may comprise a handheld device, which may be used by a field level maintainer. Typically, the handheld device is connected to the central server and receives the necessary information to quickly fix the device problem. This may help especially in reducing the number of trips necessary to the device location and ensuring the pre-conditions to carry out the repair. For example, carrying the right spare parts, carrying the heavy equipment lifts etc.

The objective is also solved by a railway system.

The railway system comprises at least two railway lines, several devices arranged along the at least two railway lines, a communication network and a monitoring station as described above and below. The at least one health parameter of each device is sent via the communication network to the monitoring station for further processing by the computational unit.

In other words, this configuration includes a railway system comprising two or more railway lines and multiple devices arranged along these lines. These devices communicate health parameters to the central monitoring station via the communication network. Typically, the health parameters are received via the communication unit of the monitoring station. The monitoring station then processes these parameters using its computational unit. The integrated communication network ensures seamless transmission of health parameters from the devices to the monitoring station. This can facilitate real-time updates and allows for timely responses to any changes in device health. Also, by having the computational unit within the monitoring station, it allows for centralized processing and analysis, enhancing the efficiency and manageability of the system.

The railway system mentioned constitutes at least two railway lines, along which multiple devices are arranged. Alternatively or additionally the railway system can comprise multiple devices arranged on at least one train, in particular onboard devices, on one of the railway lines. Typically, the railway system comprises several railway lines building a complex railway network.

The devices arranged along the railway lines perform various operational functions. Each device communicates at least one health parameter to the monitoring station via the communication network, providing valuable data for the system's operation and maintenance.

The communication network ensures safe communication between the devices and the monitoring station, enabling the permanent exchange of data across the system.

Further advantages of the invention can be seen from the description and the drawing. Likewise, the above-mentioned and the still further described features can be used according to the invention in each case individually or as a plurality in any desired combination. The embodiments shown and described are not to be 30 understood as a conclusive list, but rather have an exemplary character for the description of the invention.

### Detailed description of the invention and drawing

- Fig. 1: shows a schematic representation of a computer-implemented method for central monitoring and maintaining of a railway system.
- Fig. 2: shows a schematic representation of a railway system comprising several railway lines and a monitoring station.

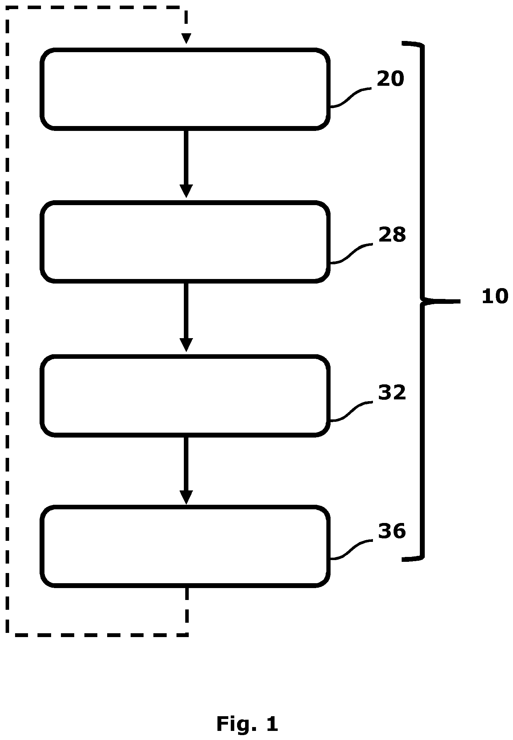

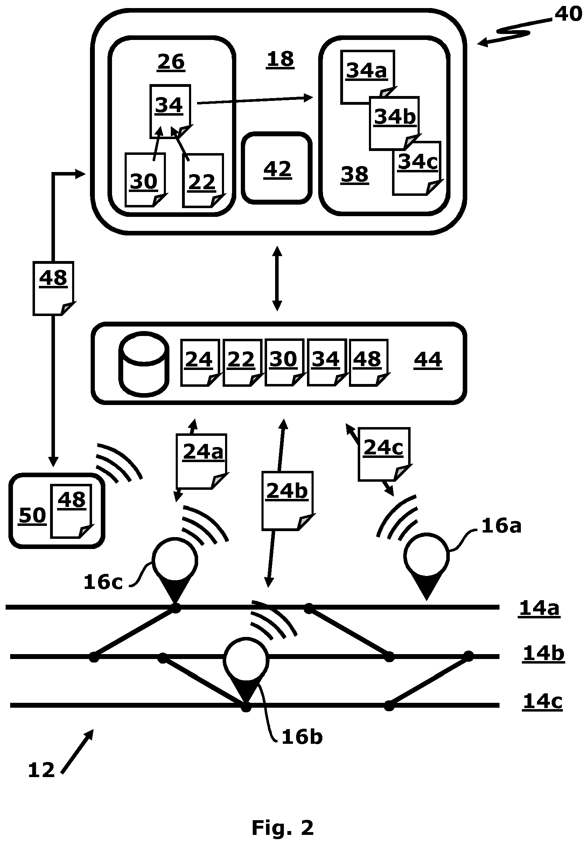

**Fig. 1** shows schematically a computer-implemented method **10** for central monitoring and maintaining of a railway network **12** (see fig. 2).

The process steps of the method 10 according to the invention are explained in more detail below with reference to Fig. 2 of the drawing.

The computer-implemented method 10 for central monitoring and maintaining of a railway network 12 is designed and set up to monitor a railway network 12 with several, in particular a large number of, railway lines **14** (see fig. 2). Monitoring the railway lines 14 is to be understood as monitoring the devices **16** (see fig. 2) arranged along the railway lines 14 that enable secure railway operation. Typically, the railway lines 14 comprise a multitude of, in particular trackside arranged, devices 16, also called, in particular trackside, equipment.

The method 10 according to the invention comprises a monitoring station **18** (see fig. 2) to perform at least the following steps of the method 10:
One step **20** of the method 10 involves determining of a health index **22** (see fig. 2) of each device 16 by rating at least one health parameter **24** (see fig. 2) provided by each device 16. The health parameter 24 is rated using a predetermined parameter table. Typically, the health index 22 is computed by a computational unit **26** (see fig. 2) of the monitoring station 18.

Another step **28** of the method 10 involves determining of an operational importance index **30** (see fig. 2) for each of the devices 16 based on a degree of importance of an associated railway line 14 and an impact of a device failure on the operation of the railway line 14. Determination of the operational index 30 is typically performed by the computational unit 26.

Another step **32** of the method 10 involves determining of a maintenance index **34** (see fig. 2) for each device 16 depending on the respective operational importance index 30 and the respective health index 22. The maintenance index 34 is usually computed by the computational unit 26.

Another step **36** of the method 10 involves the output, in particular the visualisation, of the maintenance indexes 34 of the devices 16 sorted by value. The output is made via an interface **38** (see fig. 2) of the monitoring station 18.

In a particular embodiment, it may be provided that the steps 20, 28, 32 and 32 individually and/or together are repeated continuously, in particular in real-time. This allows the monitoring to be carried out even more reliably.

**Fig. 2** shows a schematic representation of a railway system **40** comprising a railway network 12 with several railway lines **14a, 14b, 14c** and a monitoring station 18.

The monitoring station 18 comprises a computational unit 26 and an interface 38. The interface 38 is preferably designed as a human-machine-interface, which allows bidirectional communication between the monitoring station 18 and a user.

The monitoring station 18 usually provides a communication unit **42,** to establish a communication network between the monitoring station 18 and the devices 16. Furthermore, the communication unit 42 may serve as a connection to an external data storage **44,** in particular a cloud system. The external data 44 storage is typically designed for storing relevant data, in particular the health parameters 24, the health indexes 22, the operational importance indexes 30 and/or the maintenance indexes 34. Furthermore, it can serve as a memory for device related information **46** that can be used for detailed maintenance proposals **48.**

As shown by fig. 2, the monitoring station 18 may comprise a handheld device **50,** which may be used by a field level maintainer. As to the shown embodiment of the monitoring station 18, the handheld device 50 is connected to the monitoring station 18 and receives the information, for example a maintenance proposal 48, to accomplish a maintenance process at a device 16.

As exemplary shown in fig. 2, the devices 16 are arranged along the railway lines 14a-c. The devices **16a, 16b** are arranged along the railway line 14a. The device **16b** is arranged along railway line 14c. The communication between the devices 16 and the monitoring station 18 is established wireless. For example, via radio transmitter.

In an exemplary scenario, the railway lines 14a-c may operate as alternative line to each other, having the same traffic volume. Therefore, the operational importance may initially be equal for all of the railway lines 14a-c. This results in equal operational importance indexes 30 for all of the devices 16 along the railway lines 14a-c. As alternative railway lines 14a-c are available, the importance indexes 30 could initially set to low importance.

Assuming, in this exemplary scenario the device 16c, for example a point machine, which is located on the railway line 14a has an operational index 30 of low. This importance index 30 could raise to high, if the railway lines 14b and/or 14c are under maintenance. In this case, the entire train traffic is routed to the railway line 14a. A failure of the device 16c, here the point machine, would have a severe impact on the railway traffic.

In another scenario, the importance index of a device can reduced to low if alternative route are made available. For example, by design or by completing maintenance. For example, when the railway lines 14b and/or 14c under repair are fully restored then the device 16c can set to a low importance index 30.

### List of reference signs

- 10: computer-implemented method;
- 12: railway network;
- 14, 14a-c: railway lines;
- 16, 16a-c: device;
- 18: monitoring station;
- 20, 28, 32, 36: step;
- 22: health index;
- 24: health parameter;
- 26: computational unit;
- 30: importance index;
- 34: maintenance index;
- 38: interface;
- 40: railway system;
- 42: communication unit;
- 44: external data storage;
- 48: maintenance proposal;
- 50: handheld device.

### List of literature

[1] Voestalpine; Digital Track Management" (DTM) disclosed by voestalpine (https://www.voestalpine.com/railway-systems/en/products/digital-track-management/).
[2] Flexible asset monitoring system improves railway infrastructure availability; F.L.J. Van Den Bos et al.; 6th IET Conference on Railway Condition Monitoring, RCM 2014; (https://ieeexplore.ieee.org/document/7105038).
[3] DFT modeling approach for operational risk assesment of railway infrastructure; International Journal on Software Tools for Technology Transfer Springer; Publisched online: 05. April 2022; (https://doi.org/10.1007/s10009-022-00652-4).
[4] US 11,461,089 B2.

## Claims

1. **Computer-implemented method** (10) for central monitoring and maintaining of a railway network (12) consisting of a multitude of devices (16, 16a-c) with a monitoring station (18), wherein:
(a) a computational unit (26) of the monitoring station (18) determines a health index (22) of each device (16, 16a-c) by rating at least one health parameter (24) provided by each device (16, 16a-c) using a predetermined parameter table;
(b) the computational unit (26) determines an operational importance index (30) for each of the devices (16, 16a-c) based on a degree of importance of an associated railway line (14, 14a-c) and an impact of a device failure on the operation of the railway line (14, 14a-c);
(c) the computational unit (26) determines an maintenance index (34) for each device (16, 16a-c) depending on the respective operational importance index (30) and the respective health index (22);
(d) an interface (38) of the monitoring station (18) outputs the maintenance indexes (34) of the devices (16, 16a-c) sorted by value.

2. Method (10) according to claim 1, wherein at least one maintenance index (34) is determined in one of at least three categories, in particular in low critical, medium critical and high critical.

3. Method (10) according to claim 1 or 2, wherein at least one health index (22) is determined in at least three categories, in particular in poor, at-risk and good.

4. Method (10) according to one of the preceding claims, wherein at least one operational importance index (30) is determined in at least three categories, in particular in low, medium and high.

5. Method (10) according to one of the preceding claims, wherein the method steps (20, 28, 32, 36) are repeated continuously, in particular in real-time.

6. Method (10) according to one of the preceding claims, wherein at least one health parameter (24) is rated depending on the environmental conditions of the respective device (16, 16a-c).

7. Method (10) according to one of the preceding claims, wherein at least one health parameter (24) is rated depending on the device type of the respective device (16, 16a-c).

8. Method (10) according to one of the preceding claims, wherein at least one operational importance index (30) is determined depending on a railway traffic volume along the railway line (14, 14a-c) of the respective device (16, 16a-c).

9. Method (10) according to one of the preceding claims, wherein at least one operational importance index (30) is determined based on an amount of redundant railway lines (14, 14a-c) to the railway line (14, 14a-c) of the respective device (16, 16a-c).

10. Method (10) according to one of the preceding claims, wherein at least one operational importance index (30) is determined based on the type of the railway line (14, 14a-c) of a respective device (16, 16a-c).

11. Method (10) according to one of the preceding claims, wherein at least one operational importance index (30) is determined based on a mode of the railway line (14, 14a-c) of a respective device (16, 16a-c).

12. Method (10) according to one of the preceding claims, wherein the steps (a), (b) and/or (c) are performed by a neural network.

13. Method (10) according to one of the preceding claims, wherein the monitoring station (18) outputs at least one maintenance information for fixing a failure of a respective device (16, 16a-c).

14. Monitoring station (18) comprising a computational unit (42) and an interface (38), configured to carry out the method (10) according to one of the preceding claims.

15. Railway system (40) comprising at least two railway lines (14, 14a-c), several devices (16, 16a-c) arranged along the at least two railway lines (14, 14a-c) and/or arranged on at least one train on one of the two railway lines, a communication network and a monitoring station (18) according to claim 14, wherein the at least one health parameter (24) of each device (16, 16a-c) is send via the communication network to the monitoring station (18) for further processing by the computational unit (42).
